# EUROPEAN PATENT APPLICATION

(11) **EP 4 825 814 A1**
(43) Date of publication of application: **21.10.2026**
(21) Application number: 24904039.5
(22) Date of filing: 21.11.2024
(51) Int. Cl.: C02F 1/469, B01D 61/42, C02F 1/00, G05B 23/02, G05B 13/04

(54) **METHOD AND DEVICE FOR DETECTING ABNORMALITIES IN WINDOWS-BASED ELECTRODIALYSIS EQUIPMENT**

(30) Priority: 12.12.2023 KR 20230179452
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: LEE, Sihwa, Seoul 07542 (KR); KIM, Kyunghoon, Pohang-si, Gyeongsangbuk-do 37645 (KR); KIM, Dong Soo, Pohang-si, Gyeongsangbuk-do 37671 (KR); SEO, Bae Mun, Pohang-si, Gyeongsangbuk-do 37638 (KR); WI, Jin Yeop, Pohang-si, Gyeongsangbuk-do 37669 (KR)
(74) Representative: Pfenning, Meinig & Partner mbB
(86) International application number: PCT/KR2024/018442
(87) International publication number: WO 2025/127473

(57) **Abstract**

A window-based anomaly detection method for electrodialysis equipment according to an embodiment includes: setting an input window range for a control variable of the electrodialysis equipment; converting time-series data of the control variable into continuous segment unit data corresponding to the input window range; predicting a management variable corresponding to the control variable through an artificial intelligence model learned based on the continuous segment unit data; and detecting an anomaly in the electrodialysis equipment by comparing the predicted management variable with a reference value.

## Description

### [TECHNICAL FIELD]

The present invention relates to a window-based electrodialysis equipment anomaly detection method and device, and more particularly, to a window-based electrodialysis equipment anomaly detection method and device for optimal automated operation of a bipolar electrodialysis BPED process.

### [BACKGROUND ART]

BPED (BiPolar ElectroDialysis) is one of the electro-separation processes and is used to separate or concentrate specific ions from a solution using an ion exchange material. BPED is spotlighted as a particularly important water separation and recovery technology.

BPED operation data may include various data collected during the operation process of the technology. BPED operation data may include, for example, current and voltage data, substance concentration data, temperature and pressure data, and time data.

### [DISCLOSURE OF INVENTION]

### [TECHNICAL PROBLEM]

An embodiment of the present invention is to provide a window-based electrodialysis equipment anomaly detection method and device that, as a preprocessing process specialized for operational data, set appropriate sizes and ratios of an input window and a prediction window, convert continuous segment unit data, and then predict management variables for each stage of BPED (BiPolar ElectroDialysis) by applying a time-series model.

### [TECHNICAL SOLUTION]

Among embodiments, a window-based anomaly detection method for electrodialysis equipment includes: setting an input window range for a control variable of the electrodialysis equipment; converting time-series data of the control variable into continuous segment unit data corresponding to the input window range; predicting a management variable corresponding to the control variable through an artificial intelligence model learned based on the continuous segment unit data; and detecting an anomaly in the electrodialysis equipment by comparing the predicted management variable with a reference value.

The control variable may include an input flow rate and a circulation flow rate of a solution in each stage of the electrodialysis equipment, and a voltage of a rectifier, and the management variable may include conductivity of each stage and a stack voltage of rectifier.

The setting of the input window range may include setting the input window range by incorporating a propagation time during which a solution input to each stage of the electrodialysis equipment undergoes ion exchange and moves to a next stage.

The setting of the input window range may include controlling the propagation time by adjusting a salt input flow rate for a first-stage, an acid input flow rate for a third-stage, and a base input flow rate for the third-stage among the control variables.

The method may further include setting a prediction window range for the management variable based on the set input window range, wherein the setting of the prediction window range may include setting the prediction window range such that a ratio of the prediction window range to the input window range is 1:1.

The converting into the continuous segment unit data may include performing preprocessing of data cleaning and data interpolation on continuous segment data within the input window range.

The predicting of the management variable may include calculating an accuracy of the learned artificial intelligence model and resetting the input window range and the prediction window range based on the calculated accuracy.

The resetting of the input window range and the prediction window range may include controlling the propagation time by adjusting the salt input flow rate for the first-stage, the acid input flow rate for the third-stage, and the base input flow rate for the third-stage.

The predicting of the management variable may include matching a target time interval between a target time of the prediction window range and a starting point of the input window range with the input window range.

The artificial intelligence model may include a deep learning model for processing time-series data including an Informer model and a DLinear model.

Among embodiments, a window-based anomaly detection device for electrodialysis equipment includes a preprocessing unit for setting an input window range for a control variable of the electrodialysis equipment; a data conversion unit for converting time-series data of the control variable into continuous segment unit data corresponding to the input window range; a prediction unit for predicting a management variable corresponding to the control variable through an artificial intelligence model learned based on the continuous segment unit data; and an anomaly detection unit for detecting an anomaly in the electrodialysis equipment by comparing the predicted management variable with a reference value.

The control variable may include an input flow rate and a circulation flow rate of a solution in each stage of the electrodialysis equipment, and a voltage of a rectifier, and the management variable may include conductivity of each stage and a stack voltage of a rectifier.

The preprocessing unit may include an input window setting unit for setting the input window range by incorporating a propagation time during which a solution input to each stage of the electrodialysis equipment undergoes ion exchange and moves to a next stage.

The input window setting unit may control the propagation time by adjusting a salt input flow rate for a first-stage, an acid input flow rate for a third-stage, and a base input flow rate for the third-stage among the control variables.

The preprocessing unit may further include a prediction window setting unit for setting a prediction window range based on the input window range such that a ratio of the prediction window range to the input window range is 1:1.

The data conversion unit may perform preprocessing of data cleaning and data interpolation on continuous segment data within the input window range.

The prediction unit may calculate an accuracy of the learned artificial intelligence model, and the preprocessing unit may reset the input window range and the prediction window range based on the accuracy until the accuracy becomes equal to or higher than a reference level.

The input window setting unit may control the propagation time by adjusting a salt input flow rate for the first-stage, the acid input flow rate for the third-stage, and the base input flow rate for the third-stage, and resets the input window range by incorporating the propagation time.

The prediction unit may adjust a target time interval between a target time of the prediction window range and a starting point of the input window range to match the input window range.

The artificial intelligence model may include a deep learning model for processing time-series data including an Informer model and a DLinear model.

### [ADVANTAGEOUS EFFECTS]

A window-based electrodialysis equipment anomaly detection method and device according to an embodiment of the present invention, as a preprocessing process specialized for operational data, can set appropriate sizes and ratios of an input window and a prediction window, convert continuous segment unit data, and then predict management variables for each stage of BPED (BiPolar ElectroDialysis) by applying a time-series model.

### [BRIEF DESCRIPTION OF DRAWINGS]

FIG. 1 is a diagram illustrating a configuration of electrodialysis equipment according to an embodiment of the present invention.
FIG. 2 is a diagram illustrating one stage of electrodialysis equipment according to an embodiment of the present invention.
FIG. 3 is a block diagram illustrating a preprocessing process of a window-based anomaly detection method for electrodialysis equipment according to an embodiment of the present invention.
FIGS. 4A to 4D are schematic diagrams illustrating an input window and a prediction window set according to an embodiment of the present invention and a comparative example.
FIG. 5 is a diagram illustrating an example of a window-based anomaly detection method for electrodialysis equipment according to an embodiment of the present invention.
FIG. 6 is a flowchart illustrating a window-based anomaly detection method for electrodialysis equipment according to an embodiment of the present invention.
FIG. 7 is a block diagram illustrating a window-based anomaly detection device for electrodialysis equipment according to an embodiment of the present invention.
FIGS. 8A to 8G are diagrams illustrating prediction results according to an embodiment of the present invention and a comparative example.
FIG. 9 is a diagram illustrating a computing device according to an embodiment of the present invention.

### [MODE FOR CARRYING OUT THE INVENTION]

Hereinafter, embodiments of the present invention will be described in detail with reference to the accompanying drawings so that those of ordinary skill in the art to which the present invention pertains can easily implement them. However, the present invention may be implemented in many different forms and is not limited to the embodiments described herein. In addition, in order to clearly explain the present invention in the drawings, parts irrelevant to the description are omitted, and similar reference numerals are attached to similar parts throughout the specification.

Throughout the specification and claims, when a part "comprises" a certain component, it means that other components may be further included rather than excluding other components unless otherwise specified. Terms including ordinal numbers such as first and second may be used to describe various components, but the components are not limited by the terms. These terms are used only for the purpose of distinguishing one component from another component.

Terms such as "...unit", "...er", and "module" described in the specification may mean a unit capable of processing at least one function or operation described in the present specification, which may be implemented as hardware or a circuit, software, or a combination of hardware or a circuit and software.

Hereinafter, embodiments of the present invention will be described with reference to the drawings.

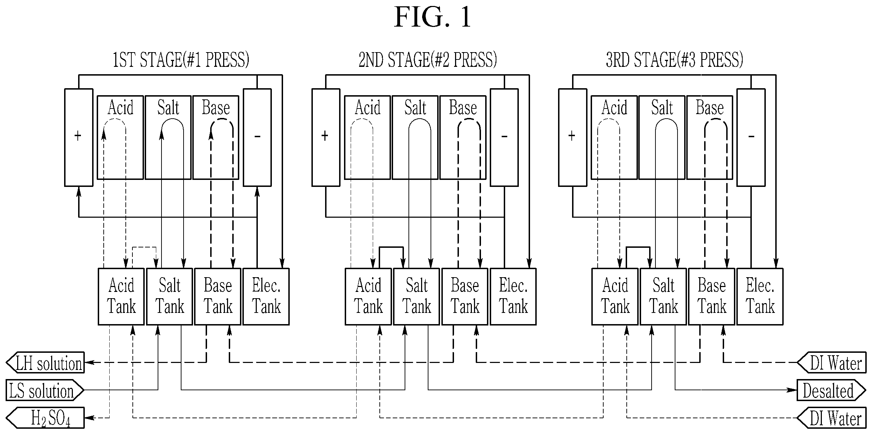

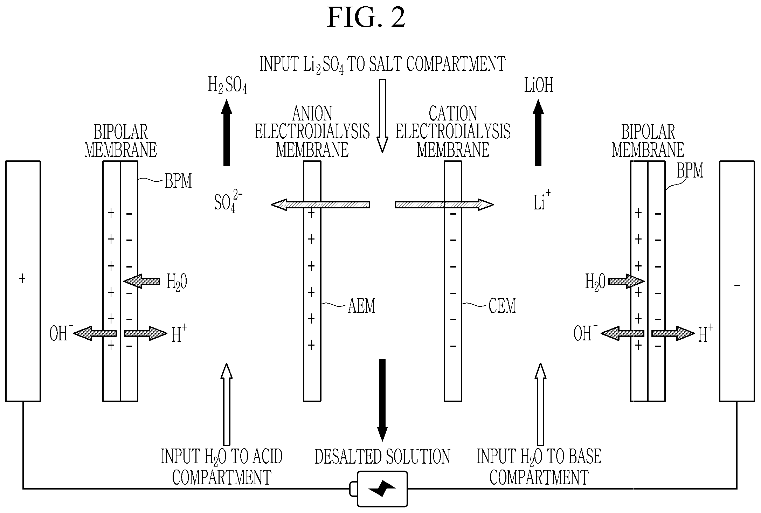

FIG. 1 is a diagram illustrating a configuration of electrodialysis equipment according to an embodiment of the present invention. FIG. 2 is a diagram illustrating a stage of electrodialysis equipment according to an embodiment of the present invention.

In FIGS. 1 and 2, the electrodialysis equipment may be bipolar electrodialysis BPED equipment. That is, the electrodialysis equipment may be bipolar structure electrodialysis equipment. The electrodialysis BPED equipment may be equipment for converting a lithium sulfate aqueous solution into lithium hydroxide and sulfuric acid. Here, lithium sulfate is Li₂SO₄, lithium hydroxide is LiOH, and sulfuric acid is H₂SO₄. The electrodialysis BPED equipment may be aqueous solution treatment equipment that simultaneously performs water splitting and ion separation using an electrodialysis membrane within an electric field.

Referring to FIGS. 1 and 2, the electrodialysis BPED equipment may include a cation exchange membrane CEM, an anion exchange membrane AEM, and a bipolar membrane BPM.

The cation exchange membrane CEM has an internal anionic group and may pass only cations (for example, Li⁺). The anion exchange membrane AEM may pass only anions (for example, SO₄²⁻) by internal cationic groups. In the bipolar membrane BPM, a cation membrane and an anion membrane are overlapped with a water-splitting catalyst interposed therebetween. The bipolar membrane BPM may split water in the electric field to generate hydrogen ions H⁺ and hydroxide ions OH⁻.

That is, the electrodialysis BPED equipment may be an aqueous solution treatment equipment that simultaneously performs water splitting (splitting into H⁺, OH⁻) and ion separation (ion separation of Li⁺, SO₄²⁻) using the electrodialysis membranes (the cation exchange membrane, the anion exchange membrane, and the bipolar membrane) within the electric field.

In FIG. 1, in the electrodialysis BPED equipment, through a three-stage process (Press) including a first stage to a third stage, LS solution may deliver Li and SO₄ ions to LH solution and sulfuric acid (H₂SO₄) solution. For example, in the electrodialysis BPED equipment, deionized DI water may be converted into the LH solution and the sulfuric acid solution while contacting LS solution in a counter flow. Here, the LS solution is lithium sulfate (Li₂SO₄), and the LH solution is lithium hydroxide (LiOH).

The first to third stages may include a salt compartment, an acid compartment, a base compartment, a salt tank, an acid tank, and a base tank, respectively.

In each stage, the salt compartment may supply lithium sulfate (Li₂SO₄) to produce desalted water after reaction. The acid compartment may supply deionized DI water to produce sulfuric acid (H₂SO₄) after reaction. The base compartment may supply deionized DI water to produce lithium hydroxide (LiOH) after reaction.

The salt tank stores the produced desalted water. The acid tank stores the produced sulfuric acid. The base tank stores the produced lithium hydroxide.

The production yield of the electrodialysis BPED equipment is determined according to output flow rates of the sulfuric acid and lithium hydroxide. The production yield may be determined according to management of an input flow rate of water (H₂O) of the electrodialysis BPED equipment, an input flow rate of lithium sulfate, a circulation flow rate, a circulation pressure, and current and voltage of a rectifier, and management of pH and conductivity in each compartment. The input flow rate of the solution, current and voltage of the rectifier, pH, conductivity, circulation flow rate, and circulation pressure, which correspond to control variables and management variables, may be detected through internal sensors installed in each compartment. The control variables and management variables may be operational data that affects determining concentrations of produced lithium hydroxide and sulfuric acid.

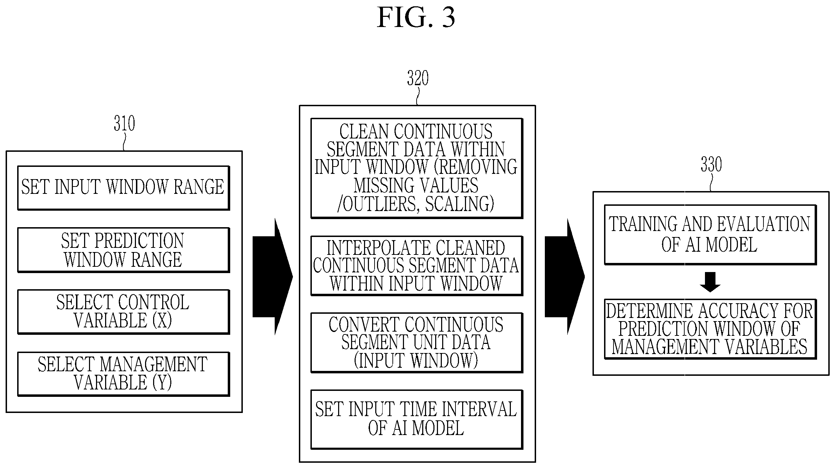

FIG. 3 is a block diagram illustrating a preprocessing process of a window-based anomaly detection method for electrodialysis equipment according to an embodiment of the present invention. The window-based anomaly detection method for electrodialysis equipment may be performed by a window-based anomaly detection device for electrodialysis equipment.

In FIG. 3, the window-based anomaly detection method for electrodialysis equipment may include a preprocessing step 310, a data conversion step 320, and a learning, evaluation, and prediction step 330 through an artificial intelligence model.

In the preprocessing step 310, the window-based anomaly detection device for electrodialysis equipment may select control variables, select management variables, and set an input window range and a prediction window range.

The window-based anomaly detection device for electrodialysis equipment may select control variables and management variables for optimal automated operation of the electrodialysis equipment. That is, the window-based anomaly detection device for electrodialysis equipment may select control variables and management variables composed of main factors affecting the optimal automated operation of the electrodialysis equipment.

For example, the control variables may include each of input flow rates and each of circulation flow rates of solutions in each stage of the electrodialysis equipment, and a voltage of a rectifier. The management variables may change according to the control variables. The management variables may include conductivity and pH of each stage of the electrodialysis equipment, and a sub-stack voltage of the rectifier.

The window-based anomaly detection device for electrodialysis equipment monitors outliers by analyzing control variables and management variables including time-series data. When analyzing the time-series data, the window-based anomaly detection device for electrodialysis equipment may appropriately select ranges or sizes of an input window and a prediction window through appropriate window preprocessing.

The input window may be a subset of control variables that are continuous in time series. The input window may be defined as a unit of control variables input to and processed by the artificial intelligence model at once. An input window range may mean a size of one unit of the control variable. For example, the input window range may be determined as a specific time range from 1 hour to 24 hours in time series.

The prediction window may be a subset of continuous management variables. The prediction window may correspond to one unit of management variable corresponding to one unit of the control variable. Similarly, a prediction window range may be determined as a specific time range from 1 hour to 24 hours. The prediction window range may be determined based on the input window range.

In the data conversion step 320, the window-based anomaly detection device for electrodialysis equipment may clean continuous segment data within the set input window range. The continuous segment data may be a set of time-series data that is continuous within the input window range. For cleaning of the continuous segment data, data cleaning techniques such as removing outliers and missing values and scaling may be used.

The window-based anomaly detection device for electrodialysis equipment may interpolate the cleaned continuous segment data. Thereafter, the window-based anomaly detection device for electrodialysis equipment may convert preprocessed time-series data into continuous segment unit data within the input window range. The conversion of the continuous segment unit data may refer to a process of dividing continuous time-series data by segment and converting the segment time-series data into a new category or value according to the corresponding segment. Such conversion may be used to simplify data or change a structure of data to fit a specific analysis purpose.

A continuous segment unit may correspond to the input window range. That is, the continuous segment unit data may include data on the control variables included in continuous segments corresponding to the input window range.

The window-based anomaly detection device for electrodialysis equipment may set an time interval of input of an artificial intelligence model. The time interval of input of the model represents a time interval between continuous data points provided to the model. For example, when data measured daily is used, the time interval of input may be 1 day.

In the learning, evaluation, and prediction step 330 through an artificial intelligence model, the window-based anomaly detection device for electrodialysis equipment may learn the artificial intelligence model based on the continuous segment unit data. The window-based anomaly detection device for electrodialysis equipment performs evaluation on the learned artificial intelligence model. The window-based anomaly detection device for electrodialysis equipment may predict management variables within the prediction window range using the learned artificial intelligence model. The window-based anomaly detection device for electrodialysis equipment may determine an accuracy of prediction by comparing the predicted management variables with actual management variables.

The window-based anomaly detection device for electrodialysis equipment may detect an anomaly of the BPED by comparing the predicted management variable with a preset reference value.

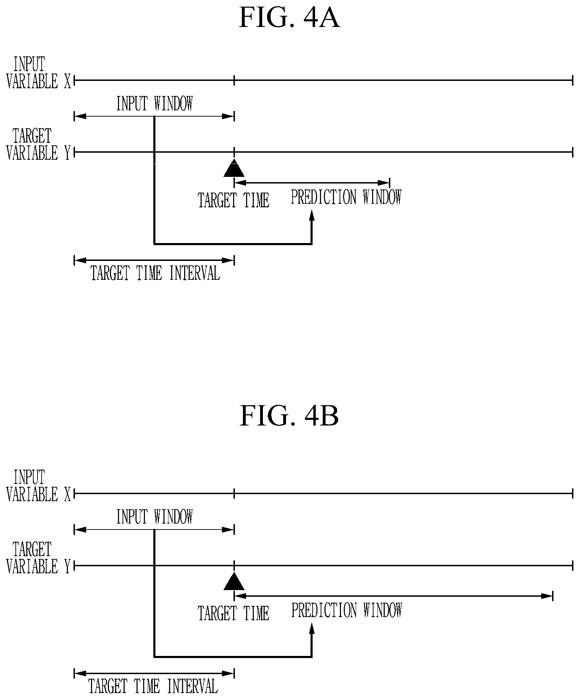

FIGS. 4A to 4D are schematic diagrams illustrating an input window and a prediction window set according to an embodiment and a comparative example of the present invention.

A range occupied by the input window on an axis X of input variable is an input window range. A range occupied by the prediction window on an axis Y of target variable is a prediction window range.

In FIGS. 4A to 4D, a target time is a time point at which the prediction window range starts. That is, the target time is a reference time for a prediction range according to the prediction window range, and the artificial intelligence model predicts the management variables within the prediction range set after the target time. A target time interval is an interval from a time point at which the input window starts to a time point at which the prediction window starts. The target time interval may be an interval between the starting point of input window and the target time.

The artificial intelligence model predicts the target variable Y in the prediction window range using the input variable X in the input window range. When the target time interval matches the input window range, there is no gap time in prediction of time-series data. The input variable may be the control variable, and the target variable may be the management variable.

FIG. 4A shows an input window and a prediction window set according to an embodiment.

In FIG. 4A, sizes or intervals of the set input window range and the set prediction window range may be identical to each other. That is, a ratio of the input window range to the prediction window range may be 1:1. In the prediction window range, the target variable Y may be predicted through a learned artificial intelligence model using input variables X in the input window range. The input window range and the target time interval may match.

FIG. 4B shows an input window and a prediction window set according to a first comparative example. The first comparative example is a case where the size of the prediction window range is larger than the size of the input window range.

In FIG. 4B, the input window range and the target time interval may match. That is, there is no gap between the target time and the input window range. Therefore, real-time prediction of time-series data may be possible.

However, sizes of the input window range and the prediction window range are different from each other. For example, a ratio of the input window range to the prediction window range may be 1:2. When the input window range and the prediction window range are not 1:1, the prediction accuracy or predictive performance may decrease. For example, when the input window range is 2 hours and the prediction window range is 4 hours, and then 2 hours are predicted after predicting 2 hours based on a window learned within 2 hours (assuming 90% accuracy), the errors are multiplied and the accuracy decreases (90% × 90% = 81%).

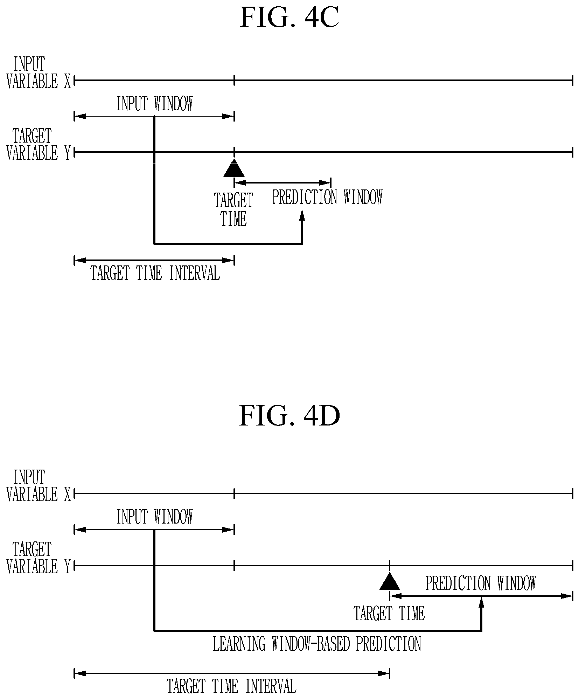

FIG. 4C shows an input window and a prediction window set according to a second comparative example. The second comparative example is a case where the size of the prediction window range is smaller than the size of the input window range.

In FIG. 4C, a ratio of the input window range to the prediction window range may be 2:1. When the input window range and the prediction window range are not 1:1, the prediction accuracy or predictive performance may decrease. For example, when the input window range is 2 hours and the prediction window range is 1 hour, overfitting may occur and the predictive performance may decrease.

FIG. 4D shows an input window and a prediction window set according to a third comparative example. The third comparative example is a case where a gap exists between the target time and the input window range.

In FIG. 4D, sizes or intervals of the set input window range and the set prediction window range may be identical to each other. That is, a ratio of the input window range to the prediction window range may be 1:1. In the prediction window range, the target variable Y may be predicted through a learned artificial intelligence model using input variables X in the input window range.

In this case, a certain gap exists between the target time and the input window range. That is, a certain time gap exists in prediction of time-series data. The gap hinders real-time prediction. Here, a learning window may mean a set of input variables Y learned in the input window range.

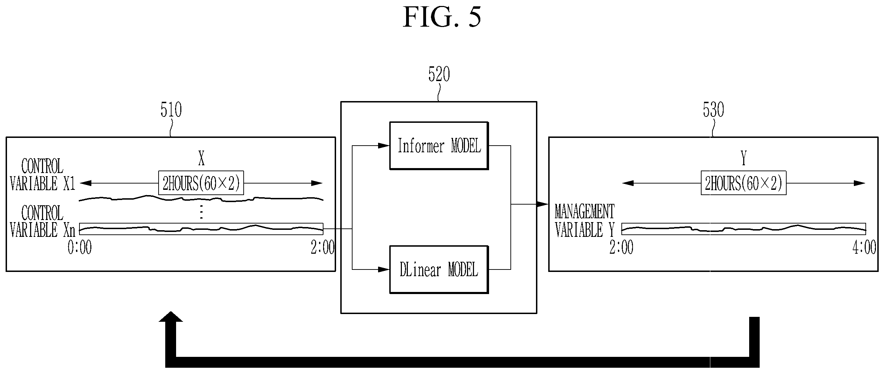

FIG. 5 is a diagram illustrating an example of predicting a management variable according to each step of a window-based anomaly detection method for electrodialysis equipment. FIG. 5 shows an input window and a prediction window set according to an embodiment.

In FIG. 5, the window-based anomaly detection device for electrodialysis equipment may set the input window range and the prediction window range to be the same as 2 hours, respectively, in a preprocessing step 510 of time-series data for learning of the artificial intelligence model. When setting the input window range, the window-based anomaly detection device for electrodialysis equipment may incorporate a propagation time during which a solution input to each stage of the electrodialysis equipment undergoes ion exchange and moves to a next stage. The window-based anomaly detection device for electrodialysis equipment may set a prediction window range that matches the input window range set above. For example, the window-based anomaly detection device for electrodialysis equipment may set an input window range of 2 hours from 0 to 2 hours for control variables X1 to Xn.

The window-based anomaly detection device for electrodialysis equipment may convert the control variables X within the input window range into continuous segment unit data. The continuous segment unit may be a 2-hour unit corresponding to the input window range.

In a learning step 520 of the artificial intelligence model, the window-based anomaly detection device for electrodialysis equipment may learn a deep learning model for time-series processing based on the continuous segment unit data. The deep learning model for time-series processing may include an Informer model and a DLinear model. The deep learning model for time-series processing may include at least one of the Informer model and the DLinear model.

The Informer model is one of the deep-learning-based prediction models for time-series data and mainly aims for high-performance prediction for a long sequence of time-series data. The DLinear model is a model that combines a time-series decomposition scheme with a linear layer. The DLinear model first generates moving average values and decomposes them into trend and periodicity data to be learned separately by removing them. Then, the DLinear model learns by applying a single linear layer to each component and calculates a final prediction by summing the two.

In a prediction step 530 of the management variable, the window-based anomaly detection device for electrodialysis equipment may predict the management variable Y within the prediction window range through the learned deep learning model for time-series processing. For example, the deep learning model for time-series processing may predict the management variable Y within the prediction window range set to 2 hours. The window-based anomaly detection device for electrodialysis equipment may predict the management variable Y within the prediction window range between 2 and 4. That is, the target time may be 2 and the target time interval may be 2 hours. Therefore, in an embodiment, the target time interval may match the input window range. That is, the window-based anomaly detection device for electrodialysis equipment may predict the management variable in real time without a gap between the input window and the prediction window.

A window-based anomaly detection device for electrodialysis equipment according to an embodiment may set a ratio of an input window range to a prediction window range to 1:1. Further, the window-based anomaly detection device for electrodialysis equipment may match a target time interval with the input window range so that there is no gap between the input window and the prediction window. Accordingly, the window-based anomaly detection device for electrodialysis equipment may increase prediction accuracy through real-time prediction of the management variables.

The window-based anomaly detection device for electrodialysis equipment may calculate an accuracy by comparing a predicted management variable with an actual management variable to increase the prediction accuracy. The window-based anomaly detection device for electrodialysis equipment may reset the input window range and the prediction window range when the calculated accuracy is equal to or less than a specific standard.

When resetting the input window range and the prediction window range, the window-based anomaly detection device for electrodialysis equipment may control the propagation time by adjusting a salt input flow rate for the first-stage, an acid input flow rate for the third-stage, and a base input flow rate for the third-stage among the control variables. The window-based anomaly detection device for electrodialysis equipment may reset the input window range by incorporating the propagation time and reset the prediction window range based on the reset input window range.

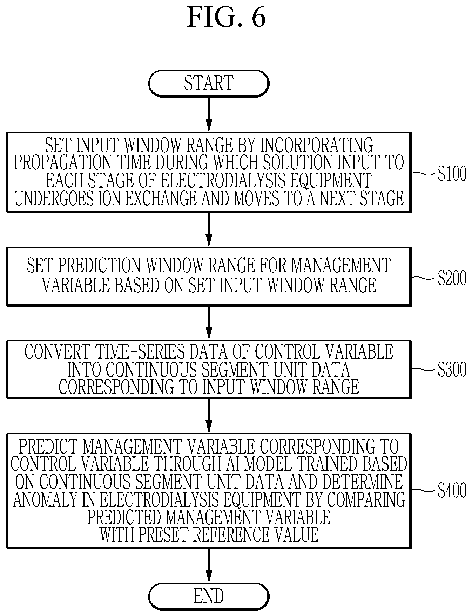

FIG. 6 is a flowchart illustrating a window-based anomaly detection method for electrodialysis equipment according to an embodiment of the present invention. The window-based anomaly detection method for electrodialysis equipment of FIG. 6 may be performed through a window-based anomaly detection device for electrodialysis equipment.

In FIG. 6, the window-based anomaly detection device for electrodialysis equipment may set the input window range by incorporating a propagation time during which a solution input to each stage of the electrodialysis equipment undergoes ion exchange and moves to a next stage (Step S100). In an embodiment, the window-based anomaly detection device for electrodialysis equipment may control the propagation time by adjusting the salt input flow rate for the first-stage, the acid input flow rate for the third-stage, and the base input flow rate for the third-stage among the control variables. Since the input window range is determined by incorporating the propagation time, the input window range may also change when the propagation time changes.

The window-based anomaly detection device for electrodialysis equipment may set the prediction window range for the management variable based on the set input window range (Step S200). The window-based anomaly detection device for electrodialysis equipment may provide feedback on the size and ratio of the window based on the accuracy of the prediction window.

For example, the window-based anomaly detection device for electrodialysis equipment may set the prediction window range such that a ratio of the input window range to the prediction window range is 1:1. That is, the window-based anomaly detection device for electrodialysis equipment may determine the prediction window range to be 2 hours when the input window range is 2 hours.

Even if the ratio of the input window range to the prediction window range is 1:1, when the window size becomes too large, learning may not progress, so the window-based anomaly detection device for electrodialysis equipment may appropriately determine the size of the window based on the accuracy of the prediction window.

Since the prediction window range is determined based on the input window range, eventually, the prediction window range may also change according to the propagation time. The window-based anomaly detection device for electrodialysis equipment may eliminate a gap in a target time interval between the input window range and the prediction window range. That is, the window-based anomaly detection device for electrodialysis equipment may match the target time interval, which is an interval between the starting point of the input window and the starting point of the prediction window, with the input window range.

The window-based anomaly detection device for electrodialysis equipment may convert time-series data of the control variable into continuous segment unit data of continuous segments corresponding to the input window range (Step S300). The continuous segment unit data are data defined in units of continuous segments corresponding to the input window range. The continuous segment unit data may be obtained by being processed through preprocessing for the control variables within the input window range.

The window-based anomaly detection device for electrodialysis equipment may learn an artificial intelligence model based on the continuous segment unit data and predict the management variable based on the control variable through the learned artificial intelligence model (Step S400). The artificial intelligence model may include a deep learning model for time-series processing. The window-based anomaly detection device for electrodialysis equipment may match the target time, which is the starting point of the prediction window range, with the time point at which the input window ends. That is, the window-based anomaly detection device for electrodialysis equipment may predict the management variable within the prediction window range in real time based on the control variable within the input window range. That is, the gap time between the input window range and the prediction window range may be removed.

Then, the window-based anomaly detection device for electrodialysis equipment may determine an anomaly in the electrodialysis equipment by comparing the predicted management variable with a preset reference value (Step S400). For example, a rectifier in each stage consists of three sub-stacks. A stack voltage, which is a voltage of the sub-stack, corresponds to one management variable. A limit voltage of the stack voltage may be 90V. When any one of a plurality of stack voltages is predicted to be 90V or higher, the window-based anomaly detection device for electrodialysis equipment may detect that an anomaly has occurred in the electrodialysis equipment.

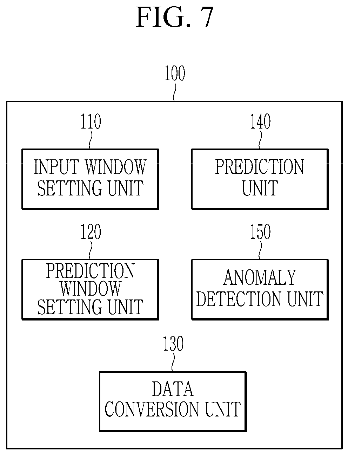

FIG. 7 is a block diagram illustrating a window-based anomaly detection device for electrodialysis equipment according to an embodiment of the present invention.

Referring to FIG. 7, a window-based anomaly detection device for electrodialysis equipment 100 may include a preprocessing unit 110, 120, a data conversion unit 130, a prediction unit 140, and an anomaly detection unit 150. The preprocessing unit may include an input window setting unit 110 and a prediction window setting unit 120.

The preprocessing unit may perform preprocessing on the control variable, which is an input variable for the deep learning model for time-series processing. The preprocessing may include data cleaning, data interpolation, scaling, and the like. The preprocessing unit may set the input window range for the control variable and the prediction window range for the management variable.

The input window setting unit 110 may set the input window range by incorporating a propagation time during which a solution input to each stage of the electrodialysis equipment undergoes ion exchange and moves to a next stage. The input window setting unit 110 may control the propagation time by adjusting the salt input flow rate for the first-stage, the acid input flow rate for the third-stage, and the base input flow rate for the third-stage among the control variables.

The prediction window setting unit 120 may set the prediction window range based on the input window range. The prediction window setting unit 120 may set the prediction window range such that a ratio of the prediction window range to the input window range is 1:1.

The data conversion unit 130 may convert the time-series data of the control variable into the continuous segment unit data corresponding to the input window range. The data conversion unit 130 may perform preprocessing of data cleaning and data interpolation on the continuous segment data within the input window range. The continuous segment data may be converted into the continuous segment unit data after preprocessing.

The prediction unit 140 may predict the management variable corresponding to the control variable through the learned artificial intelligence model based on the continuous segment unit data. The prediction unit 140 may calculate an accuracy of the learned artificial intelligence model. Based on the accuracy calculated by the prediction unit 140, the preprocessing unit 110, 120 may reset the input window range and the prediction window range until the accuracy becomes equal to or higher than a reference level. The preprocessing unit 110, 120 may reset the input window range through propagation time control and reset the prediction window range based on the input window range.

The prediction unit 140 may adjust a target time interval between a target time of the prediction window range including the management variable and a starting point of the input window range to match the input window range through the artificial intelligence model. That is, a gap time between the input window and the prediction window may be eliminated, and the management variables may be predicted in real time.

The anomaly detection unit 150 may detect an anomaly in the electrodialysis equipment by comparing the predicted management variable with a reference value. For example, the reference value may include 90V, which is a monitoring limit voltage of the stack voltage.

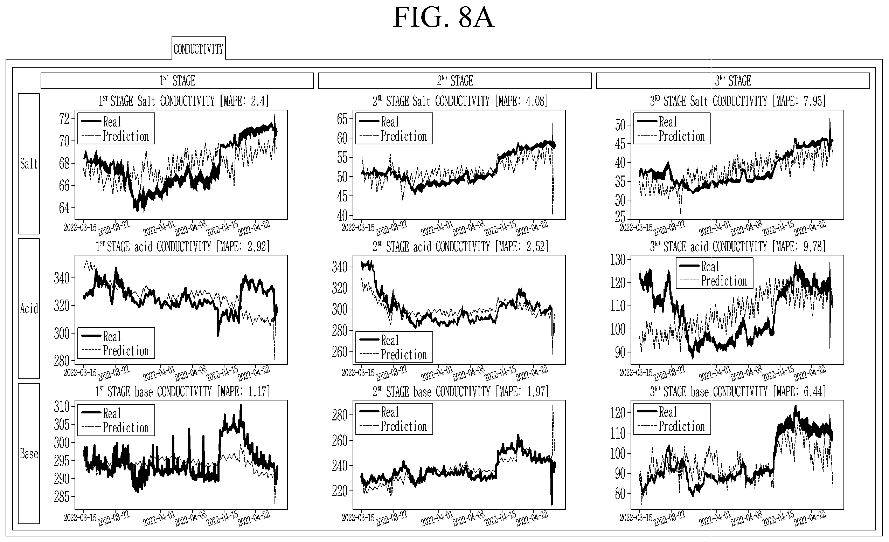

FIGS. 8A to 8G are diagrams illustrating prediction results according to an embodiment of the present invention and a comparative example.

FIG. 8A is a diagram illustrating a prediction result of conductivity according to an embodiment of the present invention. FIG. 8A is graphs illustrating conductivities appearing when a ratio of the input window range to the prediction window range is set to 1:1.

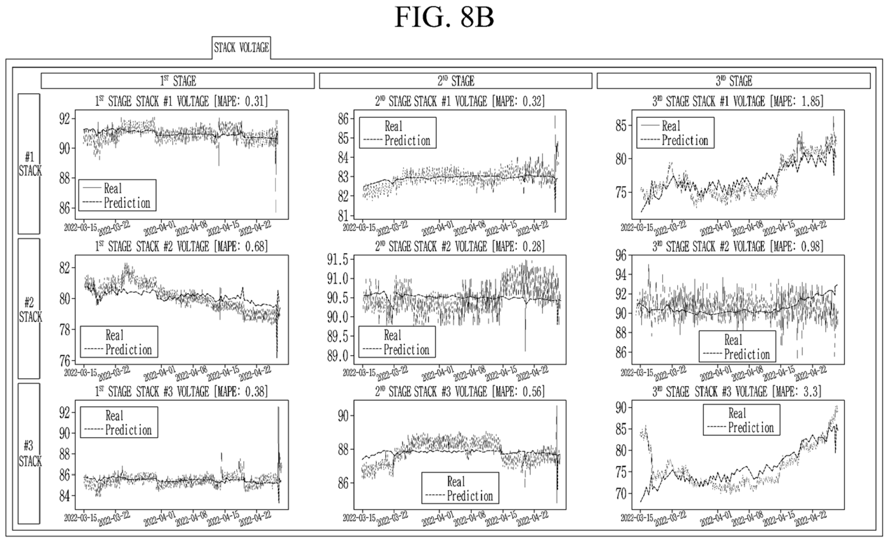

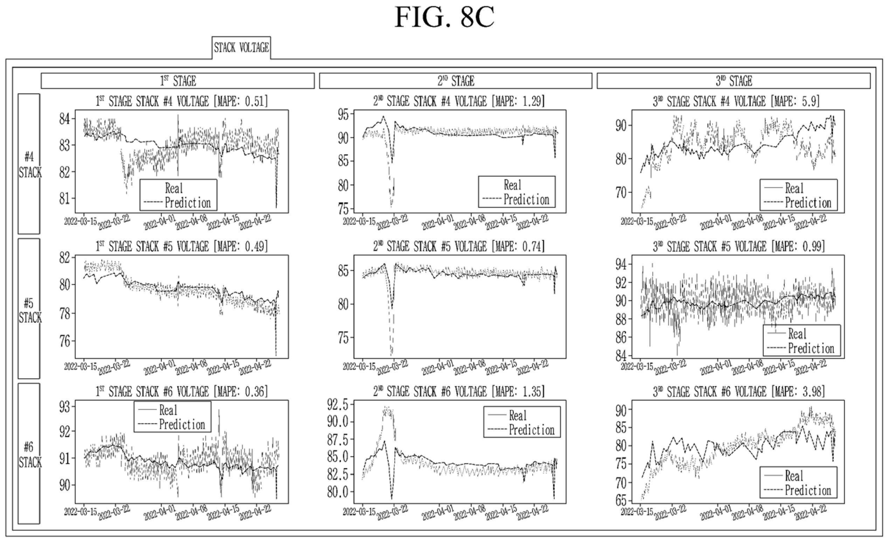

FIGS. 8B and 8C are diagrams illustrating prediction results of stack voltages according to an embodiment of the present invention. FIGS. 8B and 8C are graphs illustrating stack voltages appearing when a ratio of the input window range to the prediction window range is set to 1:1.

In FIGS. 8A to 8C, it can be seen that graphs of real values (Real) and graphs of prediction values (prediction) of the conductivities and stack voltages appearing for each solution in each stage appear similar to each other.

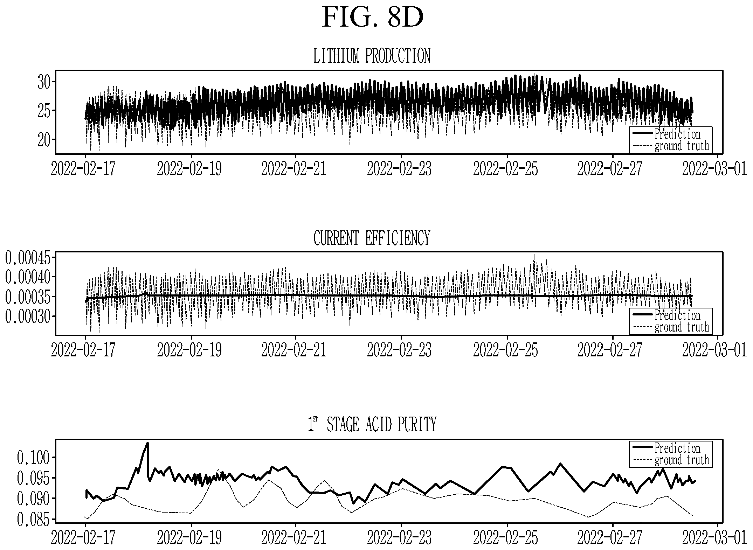

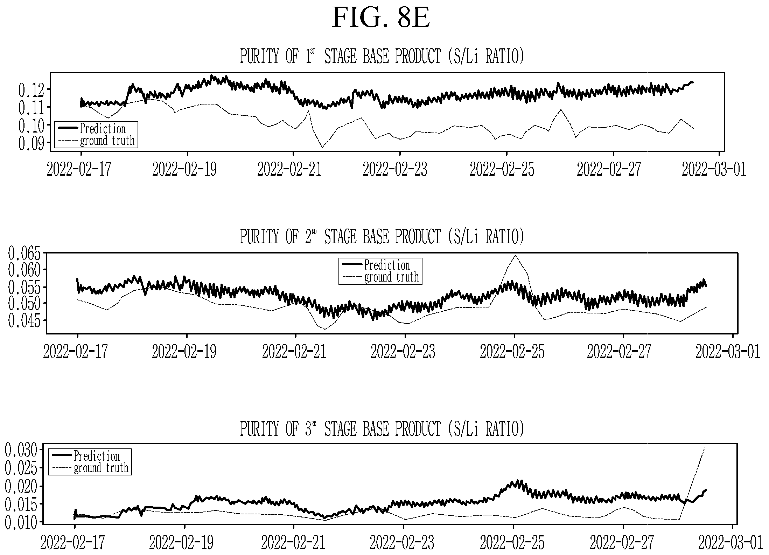

FIGS. 8D and 8E are diagrams illustrating prediction results according to a first comparative example. The first comparative example is a case where a size of the prediction window range is larger than a size of the input window (learning window).

In FIG. 8D, it can be seen that graphs of prediction and ground truth results illustrating lithium yield, current efficiency, and first-stage acid purity are different from each other.

In FIG. 8E, it can be seen that results of prediction and ground truth are different from each other in graphs for each of a purity of a first-stage Base product (LiOH), a purity of a second-stage Base product (LiOH), and a purity of a third-stage Base product (LiOH) (S/Li ratio).

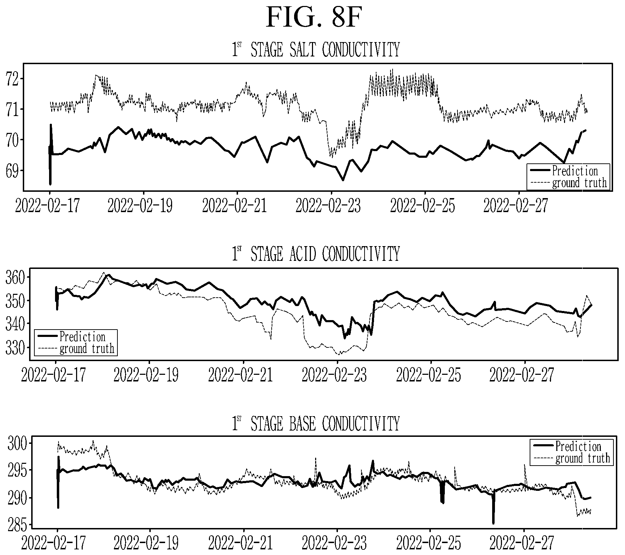

FIG. 8F is a diagram illustrating a prediction result according to a second comparative example. FIG. 8F is a graph illustrating conductivities appearing for each solution in the first stage. The second comparative example is a case where the size of a prediction window range is smaller than the size of an input window (learning window).

In FIG. 8F, it can be seen that graphs of prediction values and ground truth values in each graph for first-stage salt conductivity, first-stage acid conductivity, and first-stage base conductivity do not appear similar to each other. Although not shown, each solution conductivity in the second and third stages also shows different prediction and ground truth values in the second comparative example.

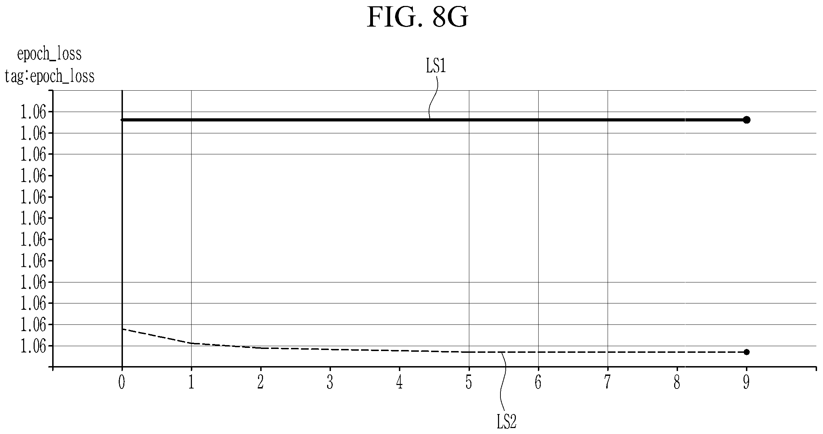

FIG. 8G is a diagram illustrating a prediction result according to another comparative example. The comparative example of FIG. 8G shows a case where a ratio of the input window range to the prediction window range is set to 1:1, but each size is set excessively large. For example, FIG. 8G shows a result in a case where the size of the input window and the size of the prediction window are set to 24 hours, respectively.

In FIG. 8G, the present comparative example shows that learning practically does not progress. When the size of the prediction window and learning time are too large, learning does not progress.

A first graph (LS1) is a loss calculated using evaluation data for each epoch, and a second graph (LS2) is a loss calculated using training data for each epoch.

In the second graph (LS2), since learning was not well performed, it can be seen that the loss value is identical to 1.06 regardless of the epoch.

Here, the epoch represents a cycle in which an entire training dataset passes through a model once.

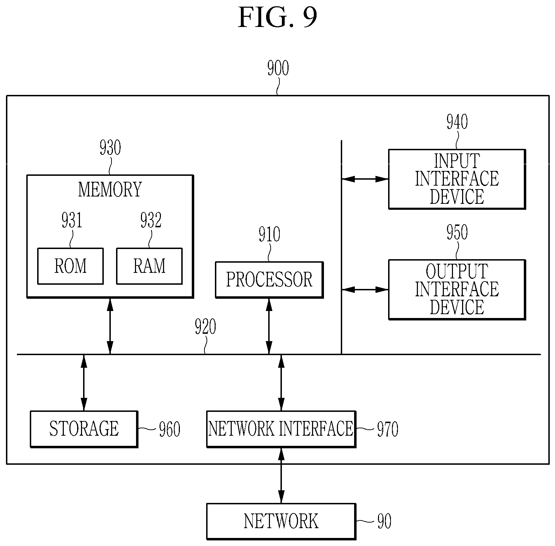

FIG. 9 is a diagram illustrating a computing device according to an embodiment of the present invention.

Referring to FIG. 9, a window-based electrodialysis equipment anomaly detection method and device according to embodiments may be implemented using a computing apparatus 900.

The computing apparatus 900 may include at least one of a processor 910, a memory 930, a input interface device 940, a output interface device 950, and a storage 960 communicating through a bus 920. The computing apparatus 900 may also include a network interface 970 electrically connected to a network 90. The network interface 970 may transmit or receive signals with other entities through the network 90.

The processor 910 may be implemented in various types such as a Micro Controller Unit MCU, an Application Processor AP, a Central Processing Unit CPU, a Graphic Processing Unit GPU, a Neural Processing Unit NPU, and the like, and may be any semiconductor device executing instructions stored in the memory 930 or the storage 960. The processor 910 may be configured to implement the functions and methods described above with reference to FIGS. 1 to 8.

The memory 930 and the storage 960 may include various types of volatile or non-volatile storage media. For example, the memory may include a read-only memory ROM 931 and a random access memory RAM 932. In the present embodiment, the memory 930 may be located inside or outside the processor 910, and the memory 930 may be connected to the processor 910 through various known means.

In some embodiments, at least some configurations or functions of the window-based electrodialysis equipment anomaly detection method and device according to embodiments may be implemented as a program or software executed on the computing apparatus 900, and the program or software may be stored in a computer-readable medium.

In some embodiments, at least some configurations or functions of the window-based electrodialysis equipment anomaly detection method and device according to embodiments may be implemented using hardware or a circuit of the computing apparatus 900, or may be implemented as a separate hardware or circuit that can be electrically connected to the computing apparatus 900.

Although the embodiments of the present invention have been described in detail above, the scope of the rights of the present invention is not limited thereto, and various modifications and improvements by those of ordinary skill in the art using the basic concept of the present invention defined in the following claims also fall within the scope of the rights of the present invention.

### [Description of Reference Numerals]

100: window-based anomaly detection device for electrodialysis equipment
110: input window setting unit
120: prediction window setting unit
130: data conversion unit
140: prediction unit
150: anomaly detection unit

## Claims

1. A window-based anomaly detection method for electrodialysis equipment, the method comprising:
setting an input window range for a control variable of the electrodialysis equipment;
converting time-series data of the control variable into continuous segment unit data corresponding to the input window range;
predicting a management variable corresponding to the control variable through an artificial intelligence model learned based on the continuous segment unit data; and
detecting an anomaly in the electrodialysis equipment by comparing the predicted management variable with a reference value.

2. The window-based anomaly detection method for electrodialysis equipment of claim 1, wherein the control variable comprises an input flow rate and a circulation flow rate of a solution in each stage of the electrodialysis equipment, and a voltage of a rectifier, and the management variable comprises conductivity of each stage and a stack voltage of rectifier.

3. The window-based anomaly detection method for electrodialysis equipment of claim 1, wherein the setting of the input window range comprises
setting the input window range by incorporating a propagation time during which a solution input to each stage of the electrodialysis equipment undergoes ion exchange and moves to a next stage.

4. The window-based anomaly detection method for electrodialysis equipment of claim 3, wherein the setting of the input window range comprises
controlling the propagation time by adjusting a salt input flow rate for a first-stage, an acid input flow rate for a third-stage, and a base input flow rate for the third-stage among the control variables.

5. The window-based anomaly detection method for electrodialysis equipment of claim 4, further comprising
setting a prediction window range for the management variable based on the set input window range,
wherein the setting of the prediction window range comprises
setting the prediction window range such that a ratio of the prediction window range to the input window range is 1:1.

6. The window-based anomaly detection method for electrodialysis equipment of claim 5, wherein the converting into the continuous segment unit data comprises
performing preprocessing of data cleaning and data interpolation on continuous segment data within the input window range.

7. The window-based anomaly detection method for electrodialysis equipment of claim 6, wherein the predicting of the management variable comprises
calculating an accuracy of the learned artificial intelligence model and resetting the input window range and the prediction window range based on the calculated accuracy.

8. The window-based anomaly detection method for electrodialysis equipment of claim 7, wherein the resetting of the input window range and the prediction window range comprises
controlling the propagation time by adjusting the salt input flow rate for the first-stage, the acid input flow rate for the third-stage, and the base input flow rate for the third-stage.

9. The window-based anomaly detection method for electrodialysis equipment of claim 6, wherein the predicting of the management variable comprises
matching a target time interval between a target time of the prediction window range and a starting point of the input window range with the input window range.

10. The window-based anomaly detection method for electrodialysis equipment of claim 1, wherein the artificial intelligence model comprises a deep learning model for processing time-series data including an Informer model and a DLinear model.

11. A window-based anomaly detection device for electrodialysis equipment, the device comprising:
a preprocessing unit for setting an input window range for a control variable of the electrodialysis equipment;
a data conversion unit for converting time-series data of the control variable into continuous segment unit data corresponding to the input window range;
a prediction unit for predicting a management variable corresponding to the control variable through an artificial intelligence model learned based on the continuous segment unit data; and
an anomaly detection unit for detecting an anomaly in the electrodialysis equipment by comparing the predicted management variable with a reference value.

12. The window-based anomaly detection device for electrodialysis equipment of claim 11, wherein the control variable comprises an input flow rate and a circulation flow rate of a solution in each stage of the electrodialysis equipment, and a voltage of a rectifier, and the management variable comprises conductivity of each stage and a stack voltage of a rectifier.

13. The window-based anomaly detection device for electrodialysis equipment of claim 11, wherein the preprocessing unit includes an input window setting unit for setting the input window range by incorporating a propagation time during which a solution input to each stage of the electrodialysis equipment undergoes ion exchange and moves to a next stage.

14. The window-based anomaly detection device for electrodialysis equipment of claim 13, wherein the input window setting unit controls the propagation time by adjusting a salt input flow rate for a first-stage, an acid input flow rate for a third-stage, and a base input flow rate for the third-stage among the control variables.

15. The window-based anomaly detection device for electrodialysis equipment of claim 14, wherein the preprocessing unit further includes a prediction window setting unit for setting a prediction window range based on the input window range such that a ratio of the prediction window range to the input window range is 1:1.

16. The window-based anomaly detection device for electrodialysis equipment of claim 15, wherein the data conversion unit performs preprocessing of data cleaning and data interpolation on continuous segment data within the input window range.

17. The window-based anomaly detection device for electrodialysis equipment of claim 16, wherein the prediction unit calculates an accuracy of the learned artificial intelligence model, and the preprocessing unit resets the input window range and the prediction window range based on the accuracy until the accuracy becomes equal to or higher than a reference level.

18. The window-based anomaly detection device for electrodialysis equipment of claim 17, wherein the input window setting unit controls the propagation time by adjusting a salt input flow rate for the first-stage, the acid input flow rate for the third-stage, and the base input flow rate for the third-stage, and resets the input window range by incorporating the propagation time.

19. The window-based anomaly detection device for electrodialysis equipment of claim 17, wherein the prediction unit adjusts a target time interval between a target time of the prediction window range and a starting point of the input window range to match the input window range.

20. The window-based anomaly detection device for electrodialysis equipment of claim 19, wherein the artificial intelligence model includes a deep learning model for processing time-series data including an Informer model and a DLinear model.
